# EUROPÄISCHE PATENTSCHRIFT

(11) **EP 2 557 050 B1**
(45) Veröffentlichungstag und Bekanntmachung des Hinweises auf die Patenterteilung: **14.10.2015**
(21) Anmeldenummer: 11006575.2
(22) Anmeldetag: 10.08.2011
(51) Int. Cl.: B65D 17/34

(54) **Gebindedeckel und Gebinde, insbesondere Getränkedose, enthaltend diesen Gebindedeckel**
Container lids and container, in particular drinks can, comprising this container lid
Couvercle de gerbe et gerbe, notamment cannette à boisson comprenant ce couvercle de gerbe

(43) Veröffentlichungstag der Anmeldung: 13.02.2013
(73) Patentinhaber: Red Bull GmbH, 5330 Fuschl am See (AT)
(72) Erfinder: Concin, Roland, 6700 Stallehr (AT); Rinderer, Matthias, 5330 Fuschl (AT)
(74) Vertreter: Metten, Karl-Heinz

(56) Entgegenhaltungen:
- WO-A1-98/33715
- JP-A- 8 053 131
- JP-A- 9 226 762
- US-A1- 2002 088 804

## Beschreibung

Die vorliegende Erfindung betrifft einen Gebindedeckel sowie ein Gebinde, insbesondere eine Getränkedose, enthaltend diesen Gebindedeckel.

Einweggebinde für Flüssigkeiten werden schon seit langem in unterschiedlichsten Formen und Größen vielfältig eingesetzt. Besonders häufig greift man hierfür auf Getränkedosen aus Leichtmetall zurück, bei denen der Dosendeckel mit einem so genannten Bügelverschluss ausgestattet ist. Gemäß einer ersten Ausführungsvariante wird durch Betätigen dieses Bügels bzw. Hebelverschlusses das die Ausgabeöffnung bildende Areal bzw. Deckelstück in Richtung des Doseninneren gedrückt und bleibt mit dem Dosendeckel unverlierbar verbunden. Gemäß einer weiteren Ausführungsvariante wird bei Betätigung des Bügelverschlusses dieser Verschluss zusammen mit dem die Ausgabeöffnung bildenden Areal bzw. Deckelstück entfernt. Derartige Verschlusssysteme finden sich z.B. in der wo 97/030902, DE 100 18 685 C2, US 4,148410, EP 564 725 A1, WO 2005/056400 A1 und GB 2 379 917 A beschrieben.

Bei solchen Gebinden ist der Bügelverschluss bzw. ist die Hebellasche verdrehbar um ein Befestigungsmittel, häufig in der Form eines Niet, in zentraler Position mit der Deckelfläche verbunden. Die Hebellasche überlappt an ihrem ersten Ende mit einem Areal der Deckelfläche, welches die Ausgabeöffnung abdeckt. Indem dieses erste Ende durch Anheben der Hebellasche an dem gegenüberliegenden zweiten Ende auf dieses Areal eine Kraft ausübt, wird die Ausgabeöffnung freigegeben. Da das erste Ende der Hebellasche zumeist nur eine geringfügige Überlappung mit dem Areal der Deckelfläche, das die Ausgabeöffnung abdeckt und das häufig über ein Schwächungsprofil begrenzt ist, aufweist, ist es in der Regel erforderlich, diesen Öffnungsvorgang aus einer ideal ausgerichteten Hebellasche, d.h. aus der Öffnerstellung heraus vorzunehmen. Denn ansonsten kann die Hebellasche abbrechen oder sich verbiegen, so dass sich die Getränkedose nicht mehr öffnen lässt.

Zur Lösung dieses Problems ist in der US 3,453,877 vorgeschlagen worden, zwischen dem Niet für die Hebellasche und dem Areal der Ausgabeöffnung, eine Erhebung in der Deckelfläche vorzusehen, die in ein hierzu korrespondierendes Loch in der Hebellasche eingreifen soll. In gleicher Weise wird in der GB 1 106 828 vorgegangen. Dort befinden sich kleinformatige Öffnungen in den Bereich der Hebellasche, die mit hierzu korrespondierenden Vorsprüngen wechselwirken sollen. Auch die JP 07 275976 A sieht benachbart zum Niet einen Vorsprung in der Deckelfläche vor, der in ein hierzu korrespondierendes Loch in der Hebellasche eingreifen soll.

JP08053131 offenbart die Merkmale des Oberbegriffs des Anspruchs 1. Es sieht benachbart zum Niet einen in die Deckelfläche hineinragendes arretierelement vor, wobei die Hebellasche über ein zweites Arretierelement verfügt und die zwei Elemente ineinander eingreifen.

Gemäß DE 10 300 914 A1 wird ein Verdrehen der Hebellasche durch nach oben aus der Deckelfläche ragende streifenförmige Vorsprünge in Form von Sicken behindert, welche den Rand der Öffnungslasche eingrenzen und diese im Ruhezustand fixieren sollen.

Aus der GB 1 534 703 geht eine Hebellasche hervor, deren Abziehring mit Hilfe zweier innenseitig an diesem Ring angebrachter Vorsprünge an der freien Rotation um den Niet gehindert werden soll. Die Vorrichtung zur Lagefixierung der Hebellasche gemäß GB. 1 422 648 unterscheidet sich von derjenigen gemäß GB 1 534 703 allein dadurch, dass die Vorsprünge nicht am Innenrand, sondern am äußeren Rand des Abziehrings vorliegen, um ein Verdrehen desselben verhindern zu helfen.

Gemäß der DE 60 2005 002 878 T2 lässt sich ein Verdrehen der Hebel- bzw. Öffnungslasche wirkungsvoll nur durch Anbringung eines abziehbaren Klebebandes verhindern, das gleichzeitig eine Belüftungsöffnung abdeckt.

Gemäß der DE 28 42 449 presst man zur Erzeugung von Vorspannung einen Vorsprung der Öffnungslasche an die Deckeloberfläche. Auf diese Weise soll sich eine Schwenkbewegung der Öffnungslasche verhindern lassen.

Schließlich soll sich gemäß JP 2006 176142 A durch einen mit Vorsprüngen versehenen Niet dessen Drehbewegung unterbinden lassen.

Die aus dem Stand der Technik bekannten Deckelvarianten sind noch stets mit Nachteilen behaftet und lassen Wünsche offen. Beispielsweise kommt es beim Nutzer bzw. Kunden noch stets zur fehlerhaften Bedienung.

Der vorliegenden Erfindung lag daher die Aufgabe zugrunde, einen Gebindedeckel zur Verfügung zu stellen, der nicht mehr mit den Nachteilen des Stands der Technik behaftet ist und der insbesondere auf einfache und zuverlässige Weise eine sichere Handhabung eines Bügel- bzw. Hebelverschlusses ermöglicht, die eine unsachgemäße Handhabung ausschließt, ohne auf konstruktiv aufwendige Herstellschritte und/oder Bauelemente angewiesen zu sein. Diese Aufgabe wird erfindungsgemaß durch die Merkmale des Anspruchs 1 gelöst.

In einer besonders zweckmäßigen Ausgestaltung ist vorgesehen, dass die Hebellasche ein Halteelement, insbesondere eine Haltezunge, vorzugsweise aus Metall, umfasst, über die die Hebellasche, insbesondere benachbart zum ersten Endbereich der Hebellasche, mittels des Befestigungsmittels an der Deckelfläche befestigt ist. Hierbei ist besonders bevorzugt, dass das bzw. die zwei Arretierelemente in dem Halteelement bzw. der Haltezunge vorliegen.

Eine besonders geeignete Ausführungsform sieht vor, dass die zweiten Arretierelemente Einbuchtungen in Richtung der Deckelfläche darstellen oder umfassen, die in korrespondierende erste Arretierelemente in Form von Einbuchtungen in Richtung der Unterseite der Deckelfläche, insbesondere in der Öffnerstellung, eingreifen, und/oder dass die zweiten und die ersten Arretierelemente sich, insbesondere von dem Befestigungsmittel, in Richtung weg von dem Areal erstrecken.

Der erfindungsgemäße Gebindedeckel zeichnet sich in einer Ausführungsform dadurch aus, dass die Hebellasche, insbesondere das Halteelement, über mindestens zwei, drei oder vier zweite Arretierelemente verfügt und/oder dass die Deckelfläche über mindestens zwei, drei oder vier erste Arretierelemente verfügt, wobei die mindestens zwei, drei oder vier ersten und zweiten Arretierelemente in Lage und gegebenenfalls auch Form und/oder Größe korrespondieren.

Hierbei können die ersten und/oder zweiten Arretierelemente benachbart zum Befestigungsmittel vorliegen.

Die ersten und/oder zweiten Arretierelemente weisen in einer Ausgestaltung in Draufsicht eine geometrische Form auf, beispielsweise Linienform, Dreiecksform oder die Form eines Rechtecks, Trapezes, Parallelogramms, Quadrats, Kreises oder einer Ellipse.

Der erfindungsgemäße Gebindedeckel stellt in einer Variante einen Getränkedosendeckel dar.

Der umlaufende Rand der Deckelfläche des erfindungsgemäßen Gebindedeckels kann ebenfalls eine Falz umfassen.

Ferner kann vorgesehen sein, dass das Areal für die Ausgabeöffnung ein Kerbblech oder dass das Schwächungsprofil ein Kerbprofil darstellt.

Hierbei ist z.B. bevorzugt, wenn das Schwächungsprofil das Areal für die Ausgabeöffnung bis auf einen Abstandsbereich, insbesondere benachbart, zu dem ersten Endbereich in der Öffnerstellung sowie seitlich versetzt zur durch das Befestigungsmittel und den ersten Endbereich in der Öffnerstellung gebildeten Linie, umgibt.

Das Befestigungsmittel für die Anbringung der Hebellasche an die Deckelfläche liegt häufig im Bereich des Zentrums dieser Deckelfläche vor. Das Befestigungsmittel umfasst z.B. einen Niet oder stellt einen solchen dar.

Des weiteren sind solche Gebindedeckel besonders geeignet, welche ferner mindestens eine das Areal für die Ausgabeöffnung, insbesondere benachbart, partiell oder vollständig umlaufende Sicke auf der Oberseite der Deckelfläche umfassen. Dabei kann vorgesehen sein, dass das Areal für die Ausgabeöffnung beabstandet von dem Befestigungsmittel sowie insbesondere benachbart zum Rand der Deckelfläche vorliegt.

Der erfindungsgemäße Gebindedeckel kann ganz oder teilweise aus Metall und/oder Kunststoff gefertigt sein.

Ferner kann vorgesehen sein, dass der umlaufende Rand eine Ausdehnung aufweist, die sich axial von der Oberseite der Deckelfläche erstreckt.

Hierbei ist von Vorteil, wenn das Ausmaß der Ausdehnung größer ist als das Ausmaß der Ausdehnung der Hebellasche in axialer Erstreckung in Bezug auf die Deckelfläche in der Öffnerstellung, wenn das Areal für die Ausgabeöffnung noch unversehrt ist.

Diese Art der Ausgestaltung des Befestigungsmittels gestattet eine besonders zuverlässige und sichere Lagefixierung der Hebellasche in der gewünschten Öffnerstellung, die nicht mehr manipulierbar ist und ein Öffnen des Gebindes stets aus der Öffnerstellung, d.h. aus optimaler Ausrichtung der Hebellasche heraus garantiert.

Die der Erfindung zugrunde liegende Aufgabe wird des weiteren gelöst durch ein Gebinde, umfassend einen Gebindekorpus sowie einen hiermit flüssigkeitsdicht verbundenen erfindungsgemäßen Gebindedeckel. Bei den erfindungsgemäßen Gebinden kann es sich z.B. um eine Getränkedose handeln.

Der vorliegenden Erfindung lag die überraschende Erkenntnis zugrunde, dass erfindungsgemäße Gebindedeckel zugänglich sind, die erstmalig ein absolut zuverlässiges Öffnen von Gebindesystemen, wie z. B. Getränkedosen, gestatten. Beanstandungen aufgrund von Fehlbedienungen können somit vollständig ausgeschlossen werden. Im Grunde kann jegliche unsachgemäße Handhabung ausgeschlossen werden. Auf diese Weise wird ein sehr hohes Maß an Kundenzufriedenheit garantiert.

Weitere Merkmale und Vorteile der Erfindung ergeben sich aus der nachstehenden Beschreibung, in der bevorzugte

Ausführungsformen der Erfindung beispielhaft anhand schematischer Zeichnungen erläutert sind. Dabei zeigen:
- Figur 1: eine perspektivische Draufsicht auf eine Getränkedose, enthaltend einen erfindungsgemäßen Gebindedeckel,
- Figur 2: die perspektivische Ansicht des Gebindedeckels der Getränkedose gemäß Figur 1, und zwar ohne Hebellasche, und
- Figur 3: eine schematische Darstellung der Hebellasche des Gebindedeckels der Getränkedose gemäß Figur 1.

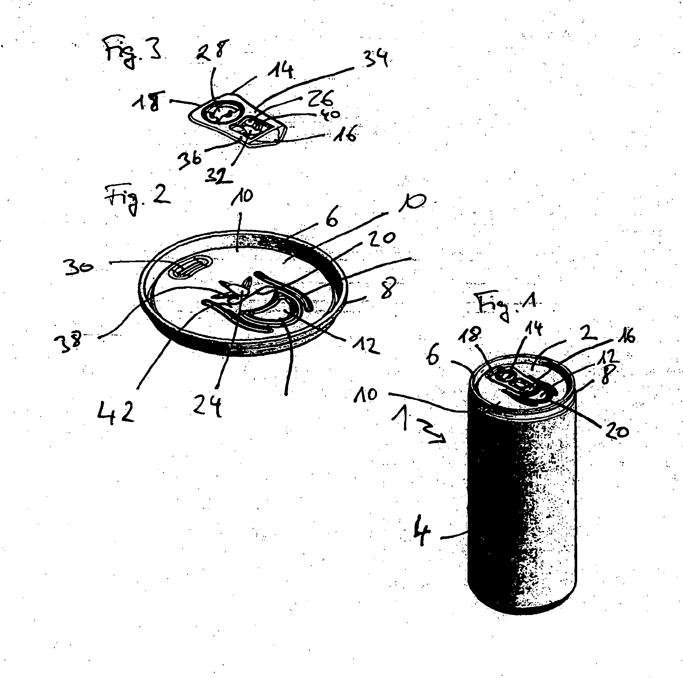

Figur 1 zeigt ein erfindungsgemäßes Gebinde 1 in Form einer Getränkedose mit einem erfindungsgemäßen Gebindedeckel 2 und einem Gebindebehältnis bzw. -korpus 4. Der Gebindedeckel 2 verfügt über einen umlaufenden Rand 6, der über eine Falzverbindung 8 mit dem Gebindebehältnis 4 fluiddicht verbunden ist. Der Gebindedeckel 2 ist ferner mit einer Deckelfläche 10 ausgestattet, in der ein Areal 12 für eine Ausgabeöffnung vorliegt. Der Gebindedeckel 2 verfügt überdies über eine Hebellasche 14, mit einem ersten Endbereich 16 in Form einer Rastnase und einem gegenüberliegenden zweiten Endbereich 18. Das Areal 12 für die Ausgabeöffnung ist, bis auf den Abstandsbereich 42, der das Hineinfallen des geöffneten Deckelflächenarealstücks in das Gebinde verhindert, umgrenzt mit einem Schwächungsprofil 20. Zur mechanischen Verstärkung der von dem Areal 12 vereinnahmten Deckelfläche ist darin eine umlaufende Sicke 22 vorgesehen. Zur Verstärkung der Ausgabeöffnung ist ferner benachbart zum Areal 12 eine umlaufende Sicke 25 vorgesehen. Die vorangehend genannten Details sind dem Gebindedeckelbauteil gemäß Figur 2 ebenfalls zu entnehmen. Bei der in den Figuren wiedergegebenen Ausführungsform ist der Gebindedeckel 2 bzw. die Deckelfläche 10 aus einem Leichtmetall, z. B. Aluminium, gefertigt.

Die Hebellasche 14 liegt in der in Figur 1 wiedergegebenen Ausführungsform in der sogenannten Öffnerstellung vor. Dieses ist die reguläre Position der Hebellasche, in der ein Öffnen stets gelingt. Denn der erste Endbereich bzw. die Rastnase 16 befindet sich in der Öffnerstellung stets in optimaler Überlappung mit dem Areal 12 für die Ausgabeöffnung. Beim Anheben der Hebellasche aus der Öffnerstellung findet über die Rastnase 16 eine optimale und zumeist auch gleichmäßige Kraftübertragung auf das Areal 12 statt. Wird die Hebellasche 14 aus dieser Öffnerstellungsposition herausverdreht, liegt entweder keine oder nur noch eine marginale Überlappung mit dem Areal 12 für die Ausgabeöffnung vor.

Die Hebellasche 14 ist über ein Befestigungsmittel 24 in Form eines Niet mit der Deckelfläche 10 verbunden. In der dargestellten Ausführungsform ist das Befestigungsmittel 24 derart dimensioniert, dass es bei Befestigung der Hebellasche 14 an die Deckelfläche 10 in das mittlere der drei ersten Arretierelemente 38 sowie auch (nicht abgebildet) in das entsprechende mittlere Arretierelement der drei zweiten Arretierelemente 40 eingreift. Auf diese Weise gelingt eine besonders sichere Lagefixierung der Hebellasche in der Öffnerstellung.

Die Hebellasche 14 verfügt im Bereich des zweiten Endbereichs 18 über eine Grifffläche bzw. Grifföffnung 28, über den die Hebellasche durch einfaches Greifen bedient werden kann. Zum bequemeren und zuverlässigeren Greifen des zweiten Endbereichs 18 der Hebellasche 14 ist in der in Figur 2 dargestellten Ausführungsform des Gebindedeckels 2 eine Einbuchtung 30 vorgesehen. Auf diese Weise kann die Hebellasche 14 im Endbereich 18 sehr leicht er-, bzw. untergriffen und zwecks Öffnung des Areals 12 angehoben werden. Zudem gestattet diese Konstruktion es, den zweiten Endbereich 18 der Hebellasche 14 sehr nah an den Rand 6 zu positionieren, wodurch Gebindedeckel mit sehr geringem Durchmesser zugänglich sind. Auch kann der Abstand der Hebellasche zur Deckelfläche in der Öffnerstellung sehr gering gehalten werden, z.B. um eine parallele Ausrichtung zu erhalten.

In der in Figur 3 wiedergegebenen Ausführungsform einer Hebellasche 14 verfügt diese über eine Haltezunge bzw. - strebe 26, welche sich von dem ersten Endbereich 16 in Richtung des zweiten Endbereichs 18 erstreckt. Diese Haltezunge 26 verfügt über ein Loch 32, zwecks Verbindung mit dem Befestigungsmittel 24 in Form eines Niet. Die Haltezunge 26 ist nur in Richtung des ersten Endbereichs 16 mit den übrigen Bestandteilen der Hebellasche 14 verbunden und wird von den umliegenden, sich von dem ersten Endbereich 16 in Richtung des zweiten Endbereichs 18 bzw. des Griffs 28 erstreckenden Haltestegen 34 und 36 eingefasst. Durch Anheben des zweiten Endbereichs 18 kann die Hebellasche 14 aus ihrer im wesentlichen zu der Deckelfläche 10 in der Öffnerstellung vorliegenden parallelen Ausrichtung herausgehoben werden. Hierbei verbleibt die Haltezunge 26 aufgrund der Befestigung mittels Niet 24 in Anlage zur Deckelfläche 10, bzw. in im Wesentlichen paralleler Ausrichtung zu dieser Deckelfläche.

Benachbart zum Befestigungsmittel bzw. Niet 24, bzw. sich von diesem Befestigungsmittel 24 aus erstreckend liegen erste Arretiereinheiten 38 in Form von Einbuchtungen bzw. Einkerbungen in der Deckelfläche 10 vor. Diese Einkerbungen 38 haben in der dargestellten Ausführungsform eine im wesentlichen lineare Ausgestaltung und erstrecken sich radial vom Befestigungsmittel 24 in Richtung des Randes 6. Zu diesen Einkerbungen 38 korrespondierende zweite Arretiereinheiten 40 in Form von Ausbuchtungen liegen in der Hebellasche 14 bzw. in der Haltezunge 26 vor. Bei Anbringung der Hebellasche 14 an die Deckelfläche 10 mit Hilfe des Befestigungsmittels 24 in Form eines Niet werden die zweiten Arretiereinheiten 40 in Form der Einbuchtungen in die in Form und Größe korrespondierenden ersten Arretiereinheiten 38 in Form von Einbuchtungen eingelassen. Nach Anbringung des Befestigungsmittels 24 befindet sich die Hebellasche 14 in Öffnerstellung, d.h. in optimaler Ausrichtung zum Areal 12 für eine Ausgabeöffnung, um ein stets einwandfreies Öffnen bei Betätigen der Hebellasche zu garantieren. Ein Verdrehen der Hebellasche 14 um das Befestigungsmittel 24 ist selbst bei Anheben des zweiten Endbereichs 18 der Hebellasche 14 nicht mehr möglich.

Die in der vorstehenden Beschreibung, in den Ansprüchen sowie in den Zeichnungen offenbarten Merkmale der Erfindung können sowohl einzeln, als auch in jeder beliebigen Kombination für die Verwirklichung der Erfindung in ihren verschiedenen Ausführungsformen wesentlich sein.

## Patentansprüche

1. Gebindedeckel (2), umfassend
eine Deckelfläche (10) mit einer Ober- und einer Unterseite sowie mit einem umlaufenden Rand (6) und mit einem Areal (12) für eine Ausgabeöffnung, begrenzt durch mindestens ein vollständig oder partiell umlaufendes Schwächungsprofil (20),
eine drehbar über ein Befestigungsmittel (24) in Form eines Niet an der Oberseite der Deckelfläche (10) befestigte Hebellasche (14) zum zumindest teilweisen Öffnen des Areals (12) unter Ausbildung der Ausgabeöffnung mit einem ersten Endbereich (16) und einem gegenüberliegenden zweiten Endbereich (18), wobei die Hebellasche (14) in Öffnerstellung vorliegt,
wobei der erste Endbereich (16) in der Öffnerstellung der Hebellasche (14) mindestens teilweise in Überlappung mit einem Abschnitt des Areals (12) für die Ausgabeöffnung bringbar ist oder vorliegt und wobei der zweite Endbereich (18) in Bezug auf den ersten Endbereich (16) jenseits des Befestigungsmittels (24) in einem ersten Abstand zur Oberseite der Deckelfläche (10) vorliegt,
wobei die Deckelfläche (10) über mindestens ein aus der Deckelfläche herausragendes und/oder in die Deckelfläche hineinragendes erstes Arretierelement (38) verfügt,
wobei die Hebellasche (14) über mindestens ein zweites Arretierelement (40) verfügt, das in der Öffnerstellung in der Weise mit dem ersten Arretierelement (38) wechselwirkt, dass eine Drehung der Hebellasche (14) um das Befestigungsmittel (24) aus der Öffnerstellung selbst bei Überführen des zweiten Endbereichs (18) in einen zweiten Abstand von der Deckelfläche (10), der größer ist als der erste Abstand, unterbindbar oder unterbunden ist, **dadurch gekennzeichnet, dass**
die ersten und zweiten Arretierelemente (38, 40) sich von dem Befestigungsmittel (24) in Richtung des zweiten Endbereichs (18) der Hebellasche (14), wenn in Öffnerstellung vorliegend, erstrecken,
wobei das bzw. die ersten Arretierelemente (38) sich von dem Befestigungsmittel radial in Richtung des Rands (6) erstrecken und dass das Befestigungsmittel (24) derart gestaltet ist, dass es mit mindestens einem ersten Arretiermittel (38) und/oder mindestens einem zweiten Arretiermittel (40) wechselwirkt, sodass eine Drehung des Befestigungsmittels (24) unterbindbar oder unterbunden ist.

2. Gebindedeckel (2) nach Anspruch 1, **dadurch gekennzeichnet, dass** die Wechselwirkung von erster und zweitem Arretierelement umfasst, dass das erste und das zweite Arretierelement (38, 40) in Form und/oder Größe derart aufeinander abgestimmt sind, dass sie, insbesondere in Öffnerstellung, in der Weise ineinander greifen, dass eine Drehung der Hebellasche (14) aus der Öffnerstellung heraus um das Befestigungsmittel (24) nicht möglich ist.

3. Gebindedeckel (2) nach Anspruch 1 oder 2, **dadurch gekennzeichnet, dass** die Hebellasche (14) ein Halteelement (26), insbesondere eine Haltezunge, vorzugsweise aus Metall, umfasst, über die die Hebellasche (14), insbesondere benachbart zum ersten Endbereich (16) der Hebellasche (14), mittels des Befestigungsmittels (24) an der Deckelfläche (10) befestigt ist.

4. Gebindedeckel (2) nach Anspruch 3, **dadurch gekennzeichnet, dass** das bzw. die zweiten Arretierelemente (40) in dem Halteelement (26) vorliegen.

5. Gebindedeckel (2) nach einem der vorangehenden Ansprüche, **dadurch gekennzeichnet, dass** die zweiten Arretierelemente (40) Einbuchtungen in Richtung der Deckelfläche (10) darstellen oder umfassen, die in korrespondierende erste Arretierelemente (38) in Form von Einbuchtungen in Richtung der Unterseite der Deckelfläche (10) in der Öffnerstellung eingreifen, und/oder dass die zweiten und die ersten Arretierelemente (40, 38) sich, insbesondere von dem Befestigungsmittel (24), in Richtung weg von dem Areal (12) erstrecken.

6. Gebindedeckel (2) nach einem der vorangehenden Ansprüche, **dadurch gekennzeichnet, dass** die Hebellasche (14), insbesondere das Halteelement (26), über mindestens zwei, drei oder vier zweite Arretierelemente (40) verfügt und/oder dass die Deckelfläche (10) über mindestens zwei, drei oder vier erste
Arretierelemente (38) verfügt, wobei die mindestens zwei, drei oder vier ersten und zweiten Arretierelemente (38,40) in Lage und gegebenenfalls auch Form und/oder Größe korrespondieren.

7. Gebindedeckel (2) nach einem der vorangehenden Ansprüche, **dadurch gekennzeichnet, dass** die ersten und/oder zweiten Arretierelemente (38, 40) im Bereich von, insbesondere zwischen, Befestigungsmittel (24) und zweitem Endbereich (18) der Hebellasche (14) vorliegen.

8. Gebindedeckel (2) nach einem der vorangehenden Ansprüche, **dadurch gekennzeichnet, dass** dieser einen Getränkedosendeckel darstellt.

9. Gebindedeckel (2) nach einem der vorangehenden Ansprüche, **dadurch gekennzeichnet, dass** der umlaufende Rand (6) der Deckelfläche (10) eine Falz (8) umfasst.

10. Gebindedeckel (2) nach einem der vorangehenden Ansprüche, **dadurch gekennzeichnet, dass** das Schwächungsprofil (20) das Areal (12) für die Ausgabeöffnung bis auf einen Abstandsbereich (42), insbesondere benachbart, zu dem ersten Endbereich (16) in der Öffnerstellung sowie seitlich versetzt zur durch das Befestigungsmittel (24) und den ersten Endbereich (16) in der Öffnerstellung gebildeten Linie, umgibt.

11. Gebindedeckel (2) nach einem der vorangehenden Ansprüche, **dadurch gekennzeichnet, dass** das Areal (12) für die Ausgabeöffnung beabstandet von dem Befestigungsmittel (24) sowie insbesondere benachbart zum Rand (6) der Deckelfläche (10) vorliegt.

12. Gebindedeckel (2) nach einem der vorangehenden Ansprüche, **dadurch gekennzeichnet, dass** der umlaufende Rand (6) eine Ausdehnung aufweist, die sich axial von der Oberseite der Deckelfläche (10) erstreckt, wobei die axiale Erstreckung des Randes (6) derart ausgebildet ist, dass das Ausmaß der Ausdehnung größer ist als das Ausmaß der Ausdehnung der Hebellasche (14) in axialer Erstreckung in Bezug
auf die Deckelfläche (10) in der Öffnerstellung, wenn das Areal (12) für die Ausgabeöffnung noch unversehrt ist.

13. Gebindedeckel (2) nach einem der vorangehenden Ansprüche, **dadurch gekennzeichnet, dass** sich zwei oder drei erste Arretierelemente (38) von dem Befestigungsmittel (24) radial in Richtung des Rands (6), insbesondere in länglicher Ausdehnung, erstrecken.

14. Gebindedeckel (2) nach einem der vorangehenden Ansprüche, **dadurch gekennzeichnet, dass** das Befestigungsmittel (24) in Form und Größe derart gestaltet ist, dass es in mindestens ein erstes Arretierelement (38) und mindestens ein zweites Arretierelement (40) eingreift, so dass eine Drehung des Befestigungsmittels (24) unterbindbar oder unterbunden ist.

15. Gebinde (1), insbesondere Getränkedose, umfassend einen Gebindekorpus (4) sowie einen hiermit flüssigkeitsdicht verbundenen Gebindedeckel (2) gemäß einem der vorangehenden Ansprüche.

## Claims

1. A container lid (2), comprising
a lid surface (10) with a top side and a bottom side, and a circumferential edge (6), and an area (12) for an outlet opening, limited by at least one fully or partially circumferential tear profile (20),
a lifting tab (14) rotatably attached to the top side of the lid surface (10) via a fastening means (24) in the form of a rivet for at least partially opening the area (12), forming the outlet opening, with a first end section (16) and an opposite second end section (18), wherein the lifting tab (14) is provided in an opening position,
wherein the first end section (16), in the opening position of the lifting tab (14), can be brought into at least a partial overlap with, or is at least partially overlapping, a portion of the area (12) for the outlet opening, and wherein the second end section (18) is provided at a first spacing from the top side of the lid surface (10) beyond the fastening means (24) relative to the first end section (16),
wherein the lid surface (10) comprises at least one first locking element (38) protruding from the lid surface and/or projecting into the lid surface,
wherein the lifting tab (14) comprises at least one second locking element (40) that interacts, in the opening position, with the first locking element (38) such that pivoting of the lifting tab (14) about the fastening means (24) from the opening position can be or is prevented even if the second end section (18) is moved into a second spacing from the lid surface (10) that is greater than the first spacing, **characterized in that**
the first and second locking elements (38, 40) extend from the fastening means (24) towards the second end section (18) of the lifting tab (14) when in the opening position,
**in that** the first locking element or elements (38) extend(s) from the fastening means in a radial direction towards the edge (6),
and **in that** the fastening means (24) is configured to interact with at least one first locking element (38) and/or at least one second locking element (40) in such a way that pivoting of the fastening means (24) can be or is prevented.

2. The container lid (2) according to Claim 1, **characterized in that** the interaction of the first and second locking elements is such that the first and the second locking elements (38, 40) are matched in shape and/or size to engage one another, particularly in the opening position, to prevent pivoting of the lifting tab (14) about the fastening means (24) from the opening position.

3. The container lid (2) according to Claim 1 or 2, **characterized in that** the lifting tab (14) includes a holding element (26), in particular a holding tongue, preferably made of metal, that fixes the lifting tab (14) to the lid surface (10) using the fastening means (24), particularly adjacent to the first end section (16) of the lifting tab (14).

4. The container lid (2) according to Claim 3, **characterized in that** the second locking element or elements (40) are provided in the holding element (26).

5. The container lid (2) according to any one of the preceding claims, **characterized in that** the second locking elements (40) represent or comprise indentations towards the lid surface (10) that engage matching first locking elements (38) shaped as indentations towards the bottom side of the lid surface (10) in the opening position, and/or that the second and the first locking elements (40, 38), extend in a direction away from the area (12), particularly from the fastening means (24).

6. The container lid (2) according to any one of the preceding claims, **characterized in that** the lifting tab (14), particularly the holding element (26), comprises at least two, three or four second locking elements (40) and/or that the lid surface (10) comprises at least two, three or four first locking elements (38), wherein the at least two, three or four first and second locking elements (38, 40) match with respect to their position and optionally their shape and/or size.

7. The container lid (2) according to any one of the preceding claims, **characterized in that** the first and/or second locking elements (38, 40) are provided in the region of, in particular between, the fastening means (24) and the second end section (18) of the lifting tab (14).

8. The container lid (2) according to any one of the preceding claims, **characterized in that** the container lid is a drinks can lid.

9. The container lid (2) according to any one of the preceding claims, **characterized in that** the circumferential edge (6) of the lid surface (10) includes a flange (8).

10. The container lid (2) according to any one of the preceding claims, **characterized in that** the tear profile (20) surrounds the area (12) for the outlet opening except for a spacer region (42) in relation to, in particular adjacent to, the first end section (16) in the opening position and offset to the side in relation to the line formed by the fastening means (24) and the first end section (16) in the opening position.

11. The container lid (2) according to any one of the preceding claims, **characterized in that** the area (12) for the outlet opening is spaced apart from the fastening means (24) and, in particular, adjacent to the edge (6) of the lid surface (10).

12. The container lid (2) according to any one of the preceding claims, **characterized in that** the circumferential edge (6) comprises an extension which extends axially from the top side of the lid surface (10), wherein the axial extension of the edge (6) is configured such that the size of said extension is greater than the size of the axial extension of the lifting tab (14) relative to the lid surface (10) in the opening position when the area (12) for the outlet opening is still intact.

13. The container lid (2) according to any one of the preceding claims, **characterized in that** two or three first locking elements (38) extend radially towards the edge (6) from the fastening means (24), particularly in the longitudinal dimension.

14. The container lid (2) according to any one of the preceding claims, **characterized in that** the fastening means (24) is designed with respect to its shape and size such that it engages at least one first locking element (38) and at least one second locking element (40), so that any pivoting of the fastening means (24) can be or is prevented.

15. A container (1), in particular a drinks can, comprising a container body (4) and a container lid (2) joined with it in a fluid-tight manner according to any one of the preceding claims.

## Revendications

1. Couvercle de récipient (2), comprenant
une surface de couvercle (10) avec un côté supérieur et un côté inférieur ainsi qu'avec un bord (6) périphérique et avec une aire (12) pour une ouverture de versement, limitée par au moins un profil de moindre résistance (20) entièrement ou partiellement circonférentiel,
une patte de relevage (14) fixée de façon rotative par le biais d'un moyen de fixation (24) sous la forme d'un rivet sur le côté supérieur de la surface de couvercle (10), pour l'ouverture au moins partielle de l'aire (12) avec la formation de l'ouverture de versement avec une première zone d'extrémité (16) et une deuxième zone d'extrémité (18) opposée, la patte de relevage (14) étant dans la position d'ouvreur,
la première zone d'extrémité (16) dans la position d'ouvreur de la patte de relevage (14) pouvant être amenée en chevauchement ou étant au moins partiellement en chevauchement avec un tronçon de l'aire (12) pour l'ouverture de versement, et la deuxième zone d'extrémité (18) étant, par rapport à la première zone d'extrémité (16), située au-delà du moyen de fixation (24) à une première distance du côté supérieur de la surface de couvercle (10),
la surface de couvercle (10) disposant d'au moins un premier élément d'arrêt (38) dépassant de la surface de couvercle et/ou ou dépassant dans la surface de couvercle,
la patte de relevage (14) disposant d'au moins un deuxième élément d'arrêt (40) qui, dans la position d'ouvreur, coopère avec le premier élément d'arrêt (38) de telle sorte qu'une rotation de la patte de relevage (14) autour du moyen de fixation (24) à partir de la position d'ouvreur peut être empêchée ou est empêchée même lors du déplacement de la deuxième zone d'extrémité (18) vers une deuxième distance par rapport à la surface de couvercle (10) qui est plus grande que la première distance, **caractérisé en ce que**
les premier et deuxième éléments d'arrêt (38, 40) s'étendent à partir du moyen de fixation (24) en direction de la deuxième zone d'extrémité (18) de la patte de relevage (14) quand celle-ci est dans la position d'ouvreur,
les premiers élément d'arrêt (38) s'étendant respectivement à partir du moyen de fixation radialement en direction du bord (6),
le moyen de fixation (24) est constitué de telle sorte qu'il interagit avec au moins un premier élément d'arrêt (38) et/ou au moins un deuxième élément d'arrêt (40) de telle manière qu'une rotation du moyen de fixation (24) peut être empêchée ou est empêchée.

2. Couvercle de récipient (2) selon la revendication 1, **caractérisé en ce que** l'interaction du premier et du deuxième élément d'arrêt implique que le premier et le deuxième élément d'arrêt (38, 40) sont, par la forme et/ou la taille, harmonisés entre eux de telle sorte que, en particulier dans la position d'ouvreur, ils engrènent réciproquement de telle manière qu'une rotation de la patte de relevage (14) à partir de la position d'ouvreur atour du moyen de fixation (24) est impossible.

3. Couvercle de récipient (2) selon la revendication 1 ou 2, **caractérisé en ce que** la patte de relevage (14) comprend un élément de retenue (26), en particulier une languette de retenue, de préférence en métal, par le biais de laquelle la patte de relevage (14), en particulier au voisinage de la première zone d'extrémité (16) de la patte de relevage (14), est fixée sur la surface de couvercle (10) au moyen du moyen de fixation (24).

4. Couvercle de récipient (2) selon la revendication 3, **caractérisé en ce que** le ou respectivement les deuxièmes éléments d'arrêt (40) sont situés dans l'élément de retenue (26).

5. Couvercle de récipient (2) selon une des revendications précédentes, **caractérisé en ce que** les deuxièmes éléments d'arrêt (40) constituent ou comprennent des échancrures en direction de la surface de couvercle (10) qui engrènent dans des premiers éléments d'arrêt (38) correspondants en forme d'échancrures en direction du côté inférieur de la surface de couvercle (10) dans la position d'ouvreur, et/ou **en ce que** les deuxièmes et les premiers éléments d'arrêt (40, 38) s'étendent, en particulier à partir du moyen de fixation (24), dans une direction qui les éloignent de l'aire (12).

6. Couvercle de récipient (2) selon une des revendications précédentes, **caractérisé en ce que** la patte de relevage (14), en particulier l'élément de retenue (26), dispose d'au moins deux, trois ou quatre deuxièmes éléments d'arrêt (40) et/ou en ce que la surface de couvercle (10) dispose d'au moins deux, trois ou quatre premiers éléments d'arrêt (38), les au moins deux, trois ou quatre premiers et deuxièmes éléments d'arrêt (38, 40) correspondant par la position et éventuellement également par la forme et/ou la taille.

7. Couvercle de récipient (2) selon une des revendications précédentes, **caractérisé en ce que** les premiers et/ou les deuxièmes éléments d'arrêt (40, 38) sont situés dans la zone, en particulier entre le moyen de fixation (24) et la deuxième zone d'extrémité (18) de la patte de relevage.

8. Couvercle de récipient (2) selon une des revendications précédentes, **caractérisé en ce que** ce couvercle constitue un couvercle de cannette de boisson.

9. Couvercle de récipient (2) selon une des revendications précédentes, **caractérisé en ce que** le bord (6) périphérique de la surface de couvercle (10) comprend une rainure (8).

10. Couvercle de récipient (2) selon une des revendications précédentes, **caractérisé en ce que** le profil de moindre résistance (20) entoure l'aire (12) pour l'ouverture de versement jusqu'à une plage de distance (42), en particulier au voisinage, par rapport à la première zone d'extrémité (16) dans la position d'ouvreur ainsi qu'avec un décalage latéral par rapport à la ligne formée par le moyen de fixation (24) et la première zone d'extrémité (16) dans la position d'ouvreur.

11. Couvercle de récipient (2) selon une des revendications précédentes, **caractérisé en ce que** l'aire (12) pour l'ouverture de versement est distante du moyen de fixation (24) ainsi qu'en particulier voisine du bord (6) de la surface de couvercle (10).

12. Couvercle de récipient (2) selon une des revendications précédentes, **caractérisé en ce que** le bord (6) périphérique présente une extension qui s'étend axialement à partir du côté supérieur de la surface de couvercle (10), l'étendue axiale du bord (6) étant constituée de telle sorte que la dimension de l'extension est plus grande que la dimension de l'extension de la patte de relevage (14) dans l'étendue axiale par rapport à la surface de couvercle (10) dans la position d'ouvreur quand l'aire (12) pour l'ouverture de versement est encore intacte.

13. Couvercle de récipient (2) selon une des revendications précédentes, **caractérisé en ce que** deux ou trois premiers éléments d'arrêt (38) s'étendent à partir du moyen de fixation (24) radialement en direction du bord (6), en particulier dans une extension allongée.

14. Couvercle de récipient (2) selon une des revendications précédentes, **caractérisé en ce que**, par la forme et la taille, le moyen de fixation (24) est constitué de telle sorte qu'il engrène dans au moins un premier élément d'arrêt (38) et au moins un deuxième élément d'arrêt (40) de telle manière qu'une rotation du moyen de fixation (24) peut être empêchée ou est empêchée.

15. Récipient (1), en particulier cannette à boisson, comprenant un corps de récipient (4) ainsi qu'un couvercle de récipient (2), qui lui est raccordé de façon étanche aux liquides, selon une des revendications précédentes.
